# EUROPEAN PATENT APPLICATION

(11) **EP 4 776 644 A1**
(43) Date of publication of application: **15.07.2026**
(21) Application number: 24821242.5
(22) Date of filing: 12.11.2024
(51) Int. Cl.: H04N 23/67, H04N 7/18

(54) **CONTROL METHOD, APPARATUS AND DEVICE FOR CAMERA DEVICE, AND STORAGE MEDIUM**

(71) Applicant: Shenzhen 360 Smart Life Technology Co., Ltd., Shenzhen, Guangdong 518000 (CN)
(72) Inventor: Li, Zongqing, Shenzhen, Guangdong 518000 (CN)
(74) Representative: Osterhoff, Utz
(86) International application number: PCT/CN2024/131572
(87) International publication number: WO 2026/102572

(57) **Abstract**

The present application discloses a control method, an apparatus, a device for a camera device, and a storage medium, and relates to the technical field of monitoring control. The control method for the camera device, applied to a control module in a camera including a fisheye lens of a bullet camera and a telephoto lens of the dome camera, includes: after obtaining a captured image taken by the fisheye lens of the bullet camera, identifying a target to be focused from the captured image; controlling the telephoto lens of the dome camera to capture a spatial compression image containing detailed features of the target to be focused; analyzing the motion behavior of the target to be focused based on the spatial compression image; and based on the motion behavior, adjusting the shooting angle of the fisheye lens of the bullet camera, and adjusting the monitoring angle and monitoring width of the telephoto lens of the dome camera. That is, based on the detailed features contained in the spatial compression image, the motion behavior of the target to be focused is analyzed, and the fisheye lens of the bullet camera and the telephoto lens of the dome camera are adjusted according to the motion behavior to avoid being out of the background when tracking the target to be focused, thereby improving the monitoring efficiency of the camera device.

## Description

### TECHNICAL FIELD

The present application relates to the technical field of monitoring control, and in particular to a control method, an apparatus and a device for a camera device, and a storage medium.

### BACKGROUND

A camera is a video input device, which is widely used in various fields. The camera is used as a monitoring device to ensure the safety of the scene that needs to be monitored.

At present, the cameras used for monitoring are often divided according to the monitoring range and monitoring clarity. Therefore, to capture larger and clearer monitoring images as possible, the cameras used for monitoring are designed with telephoto lenses and the bullet camera. In order to obtain the clearer monitoring images, some cameras also often use dome cameras for monitoring. In the scenes with higher requirements for monitoring images, it is common to combine the bullet camera and the dome camera for use. However, the combination of bullet and dome cameras that are commonly used often lead to a reduction in monitoring efficiency due to the limitations of the lens.

The above contents are only used to assist in understanding the technical solution of the present application and do not constitute an admission that the above contents are related art.

### SUMMARY

The main purpose of the present application is to provide a control method for a camera device, aiming to solve the technical problem that a commonly used combination of a bullet camera and a dome camera is often affected by the structure of the bullet or dome camera, resulting in a limited monitoring range.

To achieve the above objective, the present application proposes a control method for a camera device, including:
after obtaining a captured image taken by the fisheye lens of the bullet camera, identifying a target to be focused from the captured image;
controlling the telephoto lens of the dome camera to capture a spatial compression image containing a detailed feature of the target to be focused;
analyzing motion behavior of the target to be focused based on the spatial compression image; and
based on the motion behavior, adjusting a shooting angle of the fisheye lens of the bullet camera, and adjusting a monitoring angle and a monitoring width of the telephoto lens of the dome camera.

In an embodiment, before the controlling the telephoto lens of the dome camera to capture the spatial compression image containing the detailed feature of the target to be focused, the method further includes:
screening a target image set containing the target to be focused from a frame image of the captured image;
identifying a specific position of the target to be focused in the captured image from the target image set, to control the telephoto lens of the dome camera based on the specific position;
the controlling the telephoto lens of the dome camera to capture the spatial compression image containing the detailed feature of the target to be focused includes:
   determining a visual angle needed to be adjusted by the telephoto lens of the dome camera based on the specific position;
   controlling the telephoto lens of the dome camera to capture a close-up image of the target to be focused according to the visual angle;
   performing a clarity analysis on the close-up image; and
   in response to that clarity of the close-up image meets a preset clarity requirement, determining that the close-up image is the spatial compression image containing the detailed feature of the target to be focused.

In an embodiment, the performing the clarity analysis on the close-up image includes:
performing frequency domain analysis on the close-up image to determine an image frequency of the target to be focused in the close-up image;
preliminarily determining an image area with clarity not meeting the preset clarity requirement in the close-up image based on the image frequency;
performing pixel analysis on the image area to determine whether features in the image area destroy overall clarity of the close-up image;
in response to that the image area does not destroy the overall clarity of the close-up image, determining that the close-up image meets the preset clarity requirement; or
in response to that the image area destroys the overall clarity of the close-up image, determining that the close-up image does not meet the preset clarity requirement.

In an embodiment, the analyzing the motion behavior of the target to be focused based on the spatial compression image includes:
extracting a motion feature of a target to be tracked from the spatial compression image;
identifying a motion feature of a moving part of the target to be focused and a inertia feature of the target to be focused during a movement process from the motion feature;
determining motion expectation of the target to be focused based on the motion feature;
determining authenticity of the motion expectation based on the inertial feature;

in response to determining that the movement of the motion expectation is authentic, predicting the motion behavior the target to be focused based on the motion feature and the inertial feature;
in response to determining that the movement of the motion expectation is not authentic, determining real intention of the target to be focused based on the inertial feature; and
predicting the motion behavior of the target to be focused based on the real intention.

In an embodiment, the analyzing the motion behavior of the target to be focused based on the spatial compression image includes:
extracting a motion feature of a target to be tracked from the spatial compression image;
identifying a motion feature of a moving part of the target to be focused and a inertia feature of the target to be focused during a movement process from the motion feature;
determining motion expectation of the target to be focused based on the motion feature;
determining authenticity of the motion expectation based on the inertial feature;
in response to determining that the movement of the motion expectation is authentic, predicting the motion behavior the target to be focused based on the motion feature and the inertial feature;
in response to determining that the movement of the motion expectation is not authentic, determining real intention of the target to be focused based on the inertial feature; and
predicting the motion behavior of the target to be focused based on the real intention.

In an embodiment, after the obtaining the captured image taken by the fisheye lens of the bullet camera, identifying the target to be focused from the captured image includes:
after obtaining the captured image taken by the fisheye lens of the bullet camera, determining a focus area of a target to be tracked from the captured image;
in response to that there are multiple focus areas, determining a focus area with a shortest focal length from the focus areas as a target focus area; and
in response to that multiple focus targets are identified in the target focus area, determining each of the focus targets to be the target to be focused.

In an embodiment, the adjusting the shooting angle of the fisheye lens of the bullet camera and adjusting the monitoring angle and monitoring width of the telephoto lens of the dome camera includes:
predicting a motion trajectory of the target to be focused based on the motion behavior;
predicting a predicted position of the target to be focused in the captured image during a preset time period based on the motion trajectory;
determining an adjustment parameter of the telephoto lens of the dome camera and adjustment data of the fisheye lens of the bullet camera according to the predicted position;
adjusting the monitoring angle and monitoring width of the telephoto lens of the dome camera according to the adjustment parameter; and
adjusting the shooting angle of the fisheye lens of the bullet camera according to the adjustment data.

In addition, in order to achieve the above objective, the present application also provides a control apparatus for a camera device, applied to a control module in a camera. The camera includes a fisheye lens of a bullet camera and a telephoto lens of a dome camera. The apparatus includes:
an identification module, configured to obtain a captured image taken by the fisheye lens of the bullet camera and identify a target to be focused from the captured image;
a control module, configured to control the telephoto lens of the dome camera to capture a spatial compression image containing a detailed feature of the target to be focused;
a motion analysis module, configured to analyze motion behavior of the target to be focused based on the spatial compression image; and
an adjustment module, configured to adjust a shooting angle of the fisheye lens of the bullet camera and adjust a monitoring angle and a monitoring width of the telephoto lens of the dome camera, based on the motion behavior.

In addition, in order to achieve the above objective, the present application also provides a control device for a camera device, including: a memory, a processor, and a computer program stored in the memory and executable on the processor. The computer program is configured to implement the control method for the camera device as described above.

In addition, in order to achieve the above objective, the present application also provides a storage medium. The storage medium is a computer-readable storage medium; a computer program is stored on the storage medium, and when the computer program is executed by a processor, the control method for the camera device as described above is implemented.

In addition, in order to achieve the above objective, the present application also provides a computer program product, including a computer program. When the computer program is executed by a processor, the control method for the camera device as described above is implemented.

By configuring the camera device as the fisheye lens of the bullet camera and the telephoto lens of the dome camera, the fisheye lens of the bullet camera can be used to obtain a wider range of captured images. After the target to be focused is identified in the captured image, the telephoto lens of the dome camera is used to capture a spatial compression image containing detailed features of the target to be focused, so as to facilitate obtaining more detailed features of the target to be focused from the spatial compression image. Since the fisheye lens of the bullet camera has a wide shooting angle of view, and the fisheye lens can also be used to obtain high-quality captured images, the captured images taken by the fisheye lens of the bullet camera can be used as the detailed background of the spatial compression images taken by the telephoto lens of the dome camera. Since the spatial compression images taken by the telephoto lens of the dome camera have more detail features, the motion behavior of the target to be focused can be analyzed according to the detail features contained in the spatial compression images, and the fisheye lens of the bullet camera and the telephoto lens of the dome camera can be adjusted according to the motion behavior to avoid being out of the background when analyzing the behavior characteristics of the target to be focused, and to avoid the inability to accurately obtain the motion behavior of the target to be focused based on the captured images. Therefore, the monitoring efficiency of the camera device is improved.

### BRIEF DESCRIPTION OF THE DRAWINGS

The accompanying drawings, which are incorporated in and constitute a part of the description, illustrate embodiments of the present application and, together with the description, serve to explain the principles of the present application.

In order to illustrate the technical solutions in the embodiments of the present application or in the related art more clearly, accompanying drawings needed to be used in the description of the embodiments or the related art will be briefly described below. Obviously, for those skilled in the art, other drawings can also be obtained based on these drawings without creative efforts.
FIG. 1 is a schematic flow chart of a control method for a camera device according to a first embodiment of the present application.
FIG. 2 is a captured reference image provided by the control method for the camera device according to the present application.
FIG. 3 is a schematic flow chart of the control method for the camera device according to a second embodiment of the present application.
FIG. 4 is a schematic flow chart of the control method for the camera device according to a third embodiment of the present application.
FIG. 5 is a schematic flow chart of the control method for the camera device according to a fourth embodiment of the present application.
FIG. 6 is a schematic flow chart of the control method for the camera device according to a fifth embodiment of the present application.
FIG. 7 is a schematic structural diagram of modules in a control apparatus for the camera device according to an embodiment of the present application.
FIG. 8 is a schematic structural diagram of a device in a hardware operating environment involved in the control method for the camera device according to an embodiment of the present application.

The realization of the purpose, functional features and advantages of the present application will be further described in conjunction with the embodiments and with reference to the accompanying drawings.

### DETAILED DESCRIPTION OF THE EMBODIMENTS

It should be understood that the specific embodiments described herein are only used to explain the technical solution of the present application and are not used to limit the present application.

In order to better understand the technical solution of the present application, a detailed description will be given below in conjunction with the accompanying drawings and embodiments.

The main solution of the embodiment of the present application is: a control module of a camera; the camera includes a fisheye lens of a bullet camera and a telephoto lens of a dome camera, and identifying the target to be focused from the captured image after obtaining the captured image taken by the fisheye lens of the bullet camera; controlling the telephoto lens of the dome camera to capture a spatial compression image containing detailed features of the target to be focused; analyzing the motion behavior of the target to be focused based on the spatial compression image; adjusting the shooting angle of the bullet fisheye lens and adjusting the monitoring angle and monitoring width of the telephoto lens of the dome camera, based on the motion behavior.

In this embodiment, for the convenience of description, the following description is made with the control module of the camera as the execution subject.

Since the existing technology is often divided according to the monitoring range and monitoring clarity, the camera used for monitoring is designed with the telephoto lens and the bullet camera to obtain a larger and clearer monitoring image as possible. In addition, some cameras also often use the dome camera for monitoring in order to obtain a clearer monitoring image. In the scenes with higher requirements for monitoring image, bullet cameras and dome cameras are often combined for use. However, the commonly used combination of the bullet camera and the dome camera is often affected by the lens itself, resulting in reduced monitoring efficiency.

The present application provides a solution. By configuring the camera device as the fisheye lens of the bullet camera and the telephoto lens of the dome camera, the fisheye lens of the bullet camera can be used to obtain a wider range of captured images. After the target to be focused is identified in the captured image, the telephoto lens of the dome camera is used to capture a spatial compression image containing the detailed features of the target to be focused, so as to facilitate obtaining more detailed features of the target to be focused from the spatial compression image. Since the fisheye lens of the bullet camera has a wide shooting angle and a high-quality captured image can be obtained through the fisheye lens, the captured image taken by the fisheye lens of the bullet camera can be used as the detailed background of the spatial compression image captured by the telephoto lens of the dome camera. Since the spatial compression image taken by the telephoto lens of the dome camera has more detailed features, the motion behavior of the target to be focused can be analyzed based on the detail features contained in the spatial compression image, and the fisheye lens of the bullet camera and the telephoto lens of the dome camera can be adjusted according to the motion behavior to avoid being separated from the background when analyzing the behavior characteristics of the target to be focused, and to avoid the inability to accurately obtain the motion behavior of the target to be focused based on the captured image, thereby improving the monitoring efficiency of the camera device.

It should be noted that the execution subject of this embodiment can be a computing service device with data processing, network communication and program running functions, such as a tablet computer, a personal computer, a mobile phone, etc., or an electronic device, a camera control module, etc. capable of realizing the above functions. The following takes the control module of the camera as an example to illustrate this embodiment and the following embodiments.

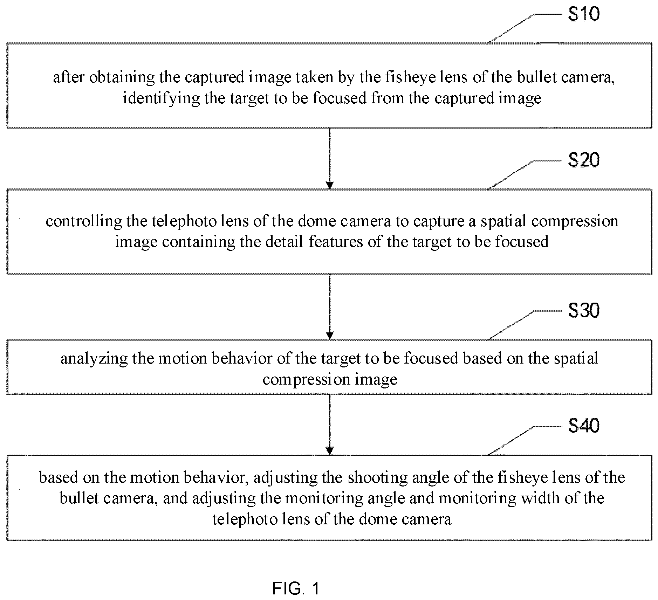

Based on this, the embodiment of the present application provides a control method for a camera device, which is applied to a control module of a camera. The camera includes a bullet fisheye lens and a dome telephoto lens. Referring to FIG. 1, FIG. 1 is a schematic flow chart of the control method for the camera device according to a first embodiment of the present application.

In this embodiment, the control method for the camera device includes steps S10 to S40.

Step S10, after obtaining the captured image taken by the fisheye lens of the bullet camera, identifying the target to be focused from the captured image.

It should be noted that the bullet camera can be a camera device with a rectangular appearance, usually equipped with a C or CS type lens interface. The fisheye lens can be an extreme ultra-wide-angle lens with a short focal length and a wide visual angle, capable of capturing an extremely wide scene. The fisheye lens of the bullet camera can be a fisheye lens with a rectangular appearance. The captured image can be a video image or a picture image captured by the fisheye lens of the bullet camera. The target to be focused can be a moving object such as an animal, a vehicle or a person.

It can be understood that since the fisheye lens of the bullet camera can capture a 180-degree horizontal range of images, it is necessary to use the fisheye lens of the bullet camera to obtain a wider monitoring picture in the scene to be monitored, so as to obtain more motion features of the target to be focused from one monitoring picture.

It can be understood that since the bullet camera ensures the continuity and effectiveness of monitoring, and can provide clear images in a completely dark environment, and the fisheye lens has a high light transmittance, it can obtain better image quality under low light conditions. Therefore, the combination of the bullet camera and the fisheye lens makes the camera device suitable for any scenario.

Step S20, controlling the telephoto lens of the dome camera to capture a spatial compression image containing the detail features of the target to be focused.

It should be noted that the dome camera can be a spherical camera. The telephoto lens can be a long-shot lens or a telephoto lens, which can bring the distant scene closer to make the details more clearly visible. The detail features can be more features of the target to be focused. For example, if the target to be focused is a person, the detail features can be facial features, hair features, clothing features or footsteps features. The spatial compression image can be an image taken after the space is compressed by the telephoto lens.

It can be understood that although the fisheye lens can improve the image quality, due to the wide shooting range of the fisheye lens, the detailed features of the target to be focused cannot be obtained. Therefore, the telephoto lens of the dome camera is provided to capture the detailed features of the target to be focused, to obtain a wider range of captured images and images with more detailed features.

It can be understood that since the dome camera can support high-definition or even ultra-high-definition video recording, high-resolution images can provide more detailed information, which helps to improve the accuracy and effectiveness of monitoring. In addition, the telephoto lens can easily capture details at a distance, and can capture clear images without getting close to the subject. The combination of the dome camera and the telephoto lens makes the images taken by the telephoto lens have high resolution, so that the features in the image taken by the telephoto lens can be displayed more clearly.

Step S30, analyzing the motion behavior of the target to be focused based on the spatial compression image.

It should be noted that the motion behavior can be the motion trend of the target to be focused.

It can be understood that in order to enable the camera device to accurately track the target to be focused, it is necessary to analyze the motion behavior of the target to be focused based on the spatial compression image.

It can be understood that since the spatial compression image contains a large number of detailed features of the target to be focused, the motion behavior of the target to be focused can be analyzed more accurately based on the spatial compression image.

Step S40, based on the motion behavior, adjusting the shooting angle of the fisheye lens of the bullet camera, and adjusting the monitoring angle and monitoring width of the telephoto lens of the dome camera.

It should be noted that the shooting angle can be a physical rotation angle of the fisheye lens of the bullet camera or the shooting angle of the fisheye lens of the bullet camera. The monitoring angle can be the physical rotation angle of the telephoto lens of the dome camera or the shooting angle of the telephoto lens of the dome camera. The monitoring width can be the focal length of the telephoto lens of the dome camera. The shorter the focal length, the wider the monitoring range. The longer the focal length, the shorter the monitoring range and the more detailed features.

It can be understood that in order to accurately track the target to be focused, the fisheye lens of the bullet camera and the telephoto lens of the dome camera can be adjusted according to the motion behavior of the target to be focused, so that the fisheye lens of the bullet camera can accurately provide a reference background for tracking the target to be focused, and the telephoto lens of the dome camera can obtain more detailed features of the target to be focused, to accurately identify the target to be focused according to the detailed features, and to avoid losing the target, thereby improving the tracking efficiency of the target to be focused.

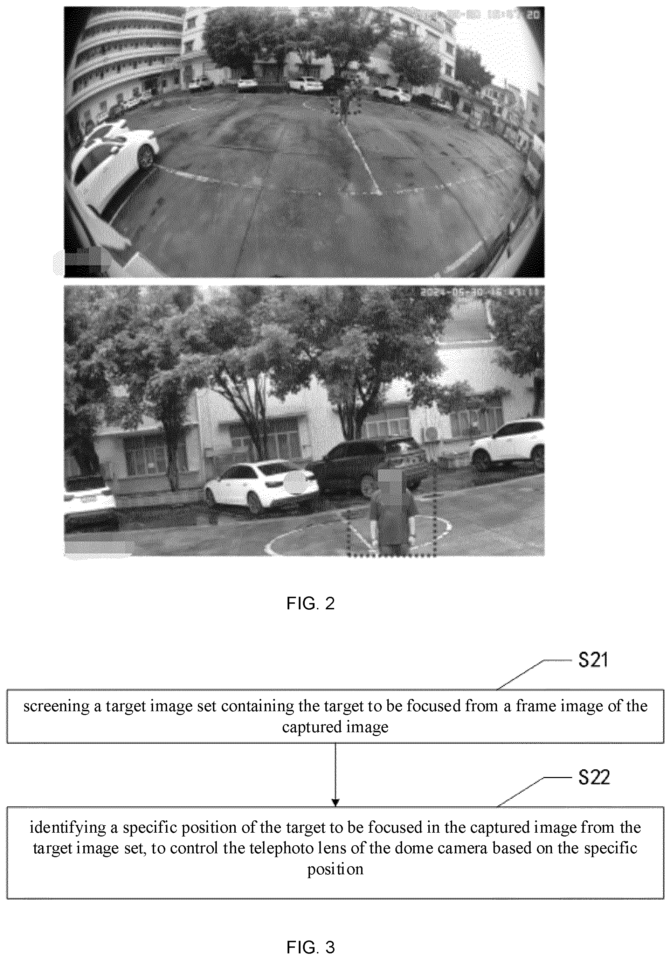

In a specific implementation, referring to FIG. 2, the upper picture in FIG. 2 is an image taken by the fisheye lens of the bullet camera, and the lower picture in FIG. 2 is a spatial compression image taken by the telephoto lens of the dome camera.

The present embodiment provides a control method for a camera device. By configuring the camera device as the fisheye lens of the bullet camera and the telephoto lens of the dome camera, the fisheye lens of the bullet camera can be used to obtain a wider range of captured images. After the target to be focused is identified in the captured image, the telephoto lens of the dome camera is used to capture a spatial compression image containing detailed features of the target to be focused, so as to facilitate obtaining more detailed features of the target to be focused from the spatial compression image. Since the fisheye lens of the bullet camera has a wide shooting angle of view, and the fisheye lens can also be used to obtain high-quality captured images, the captured images taken by the fisheye lens of the bullet camera can be used as the detailed background of the spatial compression images taken by the telephoto lens of the dome camera. Since the spatial compression images taken by the telephoto lens of the dome camera have more detail features, the motion behavior of the target to be focused can be analyzed according to the detail features contained in the spatial compression images, and the fisheye lens of the bullet camera and the telephoto lens of the dome camera can be adjusted according to the motion behavior to avoid being out of the background when analyzing the behavior characteristics of the target to be focused, and to avoid the inability to accurately obtain the motion behavior of the target to be focused based on the captured images. Therefore, the monitoring efficiency of the camera device is improved.

Based on the first embodiment of the present application, in the second embodiment of the present application, the same or similar contents as those in the first embodiment can refer to the above description, which will not be repeated in the following. On this basis, please refer to FIG. 3, before step S20, the control method for the camera device also includes steps S21~S22.
Step S21, screening a target image set containing the target to be focused from a frame image of the captured image; and
Step S22, identifying a specific position of the target to be focused in the captured image from the target image set, to control the telephoto lens of the dome camera based on the specific position.

It can be understood that by automatically screening and identifying the target to be focused from the frame image of the captured image, and by including the target image set, the position of the target to be focused in the captured image can be accurately determined. Since the background of the target to be focused in the captured image is fixed, and there is a certain proportional relationship between the captured image and the actual scene, the position of the target to be focused in the actual scene can be accurately determined by the position of the target to be focused in the captured image, and the telephoto lens of the dome camera can be accurately controlled according to the position, allowing the telephoto lens of the dome camera to accurately track the target to be focused.

It can be understood that, since the telephoto lens of the dome camera will blur the environmental information around the target to be focused when compressing the spatial distance between the lens and the target to be focused, in order to accurately and efficiently track the target to be focused, it is necessary to provide environmental information for the tracking of the target to be focused using the captured image taken by the fisheye lens of the bullet camera. Combining the images taken by the two lenses can improve the monitoring efficiency of the camera device.

Further, step S20 includes:
determining a visual angle that needs to be adjusted for the telephoto lens of the dome camera based on the specific position;
controlling the telephoto lens of the dome camera to capture a close-up image of the target to be focused according to the visual angle;
performing clarity analysis on the close-up image; and
if the clarity of the close-up image meets the preset clarity requirement, the close-up image is determined to be the spatial compression image containing the detail features of the target to be focused.

It should be noted that the visual angle can be the field of view that can be captured by the lens. The close-up image can be a picture that highlights the details of the target to be focused.

It can be understood that the specific position can enable the telephoto lens of the dome camera to quickly focus on the target to be focused. After taking a close-up image of the target to be focused, in order to make the spatially compressed picture contain more effective features, it is necessary to perform clarity analysis on the close-up image.

It can be understood that by automatically adjusting the visual angle of the telephoto lens of the dome camera and accurately aiming at the target to be focused, high-quality close-up images can be captured to improve the efficiency and accuracy of monitoring, and then the close-up images are analyzed for clarity and ensured to meet the preset clarity requirements to ensure that the acquired images have sufficient details and quality.

It can be understood that the process of automatically adjusting the lens visual angle and clarity analysis can dynamically adjust the allocation of monitoring resources according to actual needs, give priority to important targets, and help to make more reasonable use of monitoring resources and avoid unnecessary waste.

Furthermore, performing the clarity analysis on the close-up image includes:
performing frequency domain analysis on the close-up image to determine the image frequency of the target to be focused in the close-up image;
preliminarily determining the image area in the close-up image whose clarity does not meet the preset clarity requirement based on the image frequency;
performing pixel analysis on the image area to determine whether the features in the image area will destroy the overall clarity of the close-up image;
if the image area does not destroy the overall clarity of the close-up image, it is determined that the close-up image meets the preset clarity requirement; and
if the image area destroys the overall clarity of the close-up image, it is determined that the close-up image does not meet the preset clarity requirement.

It should be noted that the image frequency can be an indicator of the intensity of grayscale changes in the image, reflecting the speed of the change of the pixel grayscale value in space.

It can be understood that by performing the frequency domain analysis on the close-up image, high-frequency components in the image can be accurately identified. Since high-frequency components usually correspond to the details and edges of the image, the image area in the close-up image whose clarity does not meet the clarity requirements can be accurately analyzed based on the image frequency.

It can be understood that since some areas are partially blurred but do not affect the overall clarity, in order to reduce unnecessary processing, pixel analysis of the image area can be performed to determine whether its features will destroy the overall clarity, so as to reduce misjudgment.

Furthermore, performing the pixel analysis on the image area to determine whether the features in the image area will destroy the overall clarity of the close-up image includes:
analyzing the grayscale value of each pixel in the image area;
determining the grayscale difference between the grayscale values of adjacent pixels;
extracting feature information contained in the image area based on the grayscale value;
determining whether the feature information is a valid feature;
if the feature information is not the valid feature, determining that the features in the image area will not destroy the overall clarity of the close-up image; and
if the feature information is the valid feature, determining that the features in the image area will destroy the overall clarity of the close-up image.

It should be noted that the valid features can be features useful for identifying and tracking the target to be focused.

It can be understood that by obtaining the grayscale value of each pixel in the image area, understanding the brightness distribution of the pixels in the image area, and calculating the grayscale value difference between adjacent pixels, it is possible to identify the edges and details in the image. Areas with large grayscale differences usually represent edges or high-contrast details. The grayscale values and grayscale differences are used to extract feature information in the image area. By screening valid features from the feature information, it is possible to remove interference features in the features, to avoid mistaking insignificant noise or interference as features that affect clarity. Then, by determining whether the feature information is an effective feature, the steps of image processing are reduced, thereby improving the efficiency and accuracy of image processing, and further improving the monitoring efficiency of the camera device.

Further, determining whether the feature information is the valid feature includes:
determining whether the feature information is helpful for identifying the target to be focused;
if it is determined that the feature information is helpful, determining that the feature information is the valid feature;
if it is determined that the feature information is not helpful, determining that the feature information is not the valid feature.

It can be understood that by determining whether the feature information is helpful, the feature information that is effective for identifying the target to be focused can be screened out, thereby reducing unnecessary calculations and processing, and improving the efficiency and response speed of the system.

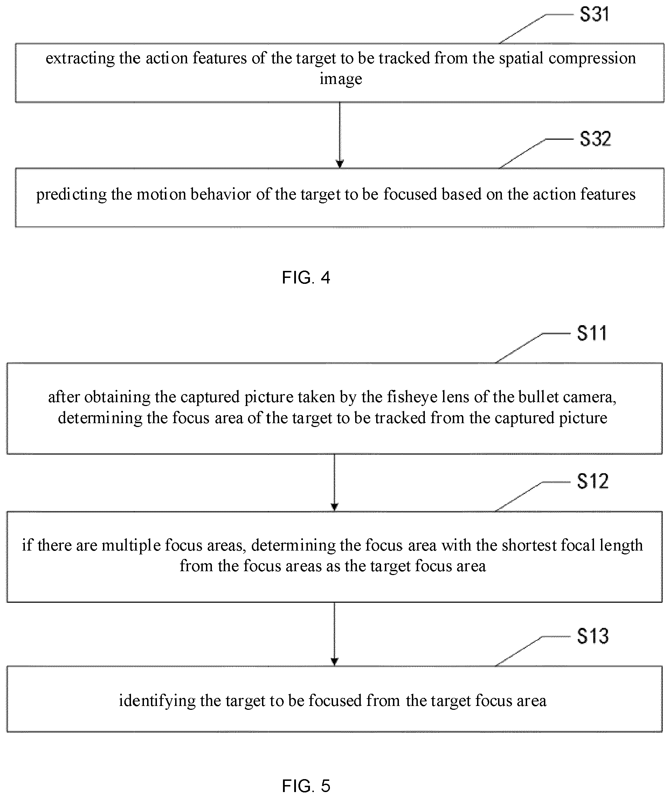

Based on the first and second embodiments of the present application, in the third embodiment of the present application, the same or similar contents as those in the above embodiments can refer to the above description, and will not be described in detail later. On this basis, please refer to FIG. 4, step S30 includes steps S31~S32.

Step S31, extracting the action features of the target to be tracked from the spatial compression image.

Step S32, predicting the motion behavior of the target to be focused based on the action features.

It should be noted that the action features can be the features of a person's swing, the orientation of the person, the swing of a person's clothes, the rotation of wheels, the footsteps of animals, the orientation of animal's fur, etc.

It can be understood that by extracting the action features of the target to be tracked from the spatial compression image, the motion behavior of the target can be more accurately identified and tracked, to effectively reduce misjudgments and missed judgments and improve the overall performance of the tracking system.

It can be understood that predicting the motion behavior of the target to be focused from the extracted action features can also provide important reference information for subsequent tracking and analysis, which helps to predict the target's motion trajectory in advance.

Further, step S32 includes:
identifying the movement features of the moving part of the target to be focused and the inertia features of the target to be focused during the movement process from the action features;
determining the movement authenticity of the target to be focused based on the movement features and the inertia features; and
if it is determined that the movement of the target to be focused is authentic, predicting the motion behavior of the target to be focused based on the movement features and the inertia features.

It should be noted that the motion authenticity can be the consistency between the motion trend of the target to be focused and the motion feature, that is, the motion feature is consistent with the inertia feature. The motion feature can be the feature during the movement of the target to be focused. The inertia feature can be the feature generated by inertia accompanying the movement. Since inertia is naturally generated during the movement and follows the motion trend, the motion trend of the target to be focused can be determined based on the inertia feature.

It can be understood that by analyzing the action features of the target, the main parts of the target's movement and its movement methods can be identified, such as the swinging of the limbs, the rotation of the torso, etc. By analyzing the inertial features of the target during movement, the movement trend and stability of the target can be understood, and then through a comprehensive analysis of movement features and inertial features of the target, it can also be determined whether the target's movement conforms to its normal movement pattern and dynamic characteristics, and then determine the authenticity of its movement.

It is understood that by filtering out false or unnatural motion features, the accuracy of the prediction results can also be improved.

Further, determining the authenticity of the motion of the target to be focused based on the motion features and the inertial features includes:
determining the motion expectation of the target to be focused based on the motion features; and
determining the authenticity of the motion expectation based on the inertial features.

It should be noted that the motion expectation can be a motion trend determined according to the motion feature.

It can be understood that since the real motion trend of the target to be focused can be determined by the inertial feature, the authenticity of the motion of the target to be focused can be accurately determined by the motion expectation determined according to the motion feature and the inertial feature.

Further, after determining the authenticity of the motion of the target to be focused based on the motion feature and the inertial feature, the method also includes:
if it is determined that the motion of the target to be focused is not real, determining the real intention of the target to be focused based on the inertial feature; and
based on the real intention, predicting the motion behavior of the target to be focused.

It can be understood that the analysis method of physical characteristics can provide a more reliable basis for prediction, thereby improving the accuracy of predictions about the target's future behavior. That is, by considering inertial features, the target's behavior can be evaluated more comprehensively, thereby reducing the risk of misjudgment caused by misunderstanding the target's intentions.

Based on the above embodiments of the present application, in the fourth embodiment of the present application, the same or similar contents as the above embodiments can refer to the above description, and will not be repeated later. On this basis, please refer to FIG. 5, step S10 includes steps S11~S13.

Step S11, after obtaining the captured picture taken by the fisheye lens of the bullet camera, determining the focus area of the target to be tracked from the captured picture.

Step S12, if there are multiple focus areas, determining the focus area with the shortest focal length from the focus areas as the target focus area.

Step S13, identifying the target to be focused from the target focus area.

It should be noted that the focus area can be an area that may be a target to be focused in the picture. For example, if there are multiple characters in the same captured image, the area where each character is located can be understood as a focus area. The focal length can refer to the distance from the optical center of the lens to the imaging plane (such as the camera sensor or film).

It can be understood that by determining the focus area of the target to be tracked from the captured picture taken by the fisheye lens of the bullet camera, the potential target area can be quickly located, thereby improving the monitoring efficiency.

It can be understood that by comparing the focal lengths of multiple focus areas and selecting the focus area with the shortest focal length as the target focus area, the target can be identified and tracked more accurately. Because the shorter the focal length, the closer the target is to the camera and the more potentially dangerous it is.

It can be understood that by identifying the target to be focused from the target focus area, the focus resources of the camera can be effectively utilized, and unnecessary focusing on unimportant areas can be avoided, thereby improving the resource utilization of the overall system.

Further, if multiple focus targets are identified in the target focus area, each of the focus targets is determined to be the target to be focused.

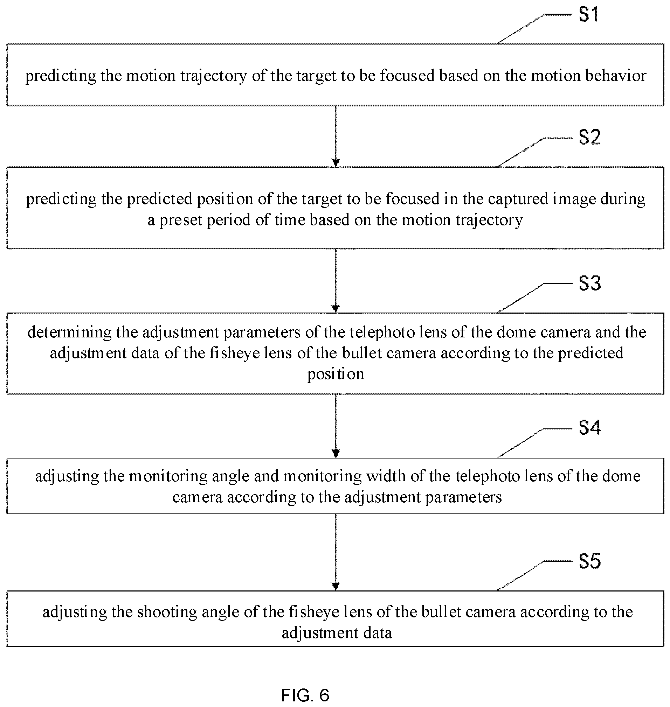

Based on the above embodiments of the present application, in the fifth embodiment of the present application, the same or similar contents as those in the above embodiments can refer to the above description, and will not be described in detail later. On this basis, please refer to FIG. 6, step S40 includes steps S1~S5.
Step S1, predicting the motion trajectory of the target to be focused based on the motion behavior;
Step S2, predicting the predicted position of the target to be focused in the captured image during a preset period of time based on the motion trajectory;
Step S3, determining the adjustment parameters of the telephoto lens of the dome camera and the adjustment data of the fisheye lens of the bullet camera according to the predicted position;
Step S4, adjusting the monitoring angle and monitoring width of the telephoto lens of the dome camera according to the adjustment parameters; and
Step S5, adjusting the shooting angle of the fisheye lens of the bullet camera according to the adjustment data.

It should be noted that the adjustment parameters can be the focal length data, shooting angle data and the angle of physical rotation required for the telephoto lens of the dome camera. The adjustment data can be the angle of physical rotation required for the fisheye lens of the bullet camera.

It can be understood that by predicting the motion trajectory and predicted position of the target to be focused, the parameters of the camera can be prepared and adjusted in advance, so that clear shooting can be performed immediately when the target reaches the predicted position, further improving the response speed and shooting efficiency of the camera device.

It can be understood that by adjusting the monitoring angle and monitoring width of the telephoto lens of the dome camera, and adjusting the shooting angle of the fisheye lens of the bullet camera, it can be ensured that the target can be focused most accurately at any time, thereby obtaining a high-quality image.

Further, step S3 includes:
determining whether it is necessary to adjust the monitoring angle and monitoring width of the telephoto lens of the dome camera according to the predicted position, and determining whether it is necessary to adjust the shooting angle of the fisheye lens of the bullet camera;
if it is necessary to adjust the monitoring angle and monitoring width of the telephoto lens of the dome camera, determining the adjustment parameters of the telephoto lens of the dome camera according to the preset position; and/or
if it is necessary to adjust the shooting angle of the fisheye lens of the bullet camera, determining the adjustment data of the fisheye lens of the bullet camera according to the preset position.

It should be noted that the monitoring angle and shooting angle data correspond to the angle at which the telephoto lens of the dome camera needs to physically rotate. The monitoring width corresponds to the focal length data. The shooting angle corresponds to the physical rotation angle at which the fisheye lens of the bullet camera needs to adjust.

It can be understood that by adjusting the monitoring angle and width, the monitoring area can be expanded to ensure that the target position is always within the monitoring range, and the telephoto lens can capture distant details. After adjustment, specific targets can be monitored more accurately and the monitoring effect can be improved. By optimizing the lens angle and width, blind spots in monitoring can be reduced and more comprehensive security can be provided.

Furthermore, determining whether it is necessary to adjust the monitoring angle and monitoring width of the telephoto lens of the dome camera according to the predicted position includes:
detecting the position difference between the predicted position and the current position, the current position being the position of the target to be focused in the spatial compression image;
determining a safe distance between the current position and the approaching edge of the spatial compression image, the approaching edge being the developing edge corresponding to the moving direction of the target to be focused in the spatial compression image;
determining whether the position difference is greater than the safe distance; and
if the position difference is greater than the safe distance, determining that it is necessary to adjust the monitoring angle and monitoring width of the telephoto lens of the dome camera.

It is understood that by detecting the position difference between the predicted position and the current position, the movement of the target to be focused can be understood in real time, to quickly adjust the lens angle and ensure that the target is always within the monitoring range.

It can be understood that determining the safe distance between the current position and the approaching edge of the spatial compression screen can prevent the target from being lost due to exceeding the monitoring range when it approaches the edge of the screen, thereby ensuring that the target is always displayed in the screen and improving the continuity and integrity of monitoring.

It can be understood that determining whether the position difference is greater than the safe distance to automatically make a decision, if the position difference is too large, the monitoring angle and width of the telephoto lens of the dome camera are automatically adjusted to adapt to the movement of the target, thereby improving the intelligence of the camera device.

Further, determining whether it is necessary to adjust the shooting angle of the fisheye lens of the bullet camera according to the predicted position includes:
determining whether the predicted position belongs to a distorted position in the captured image;
if the predicted position belongs to the distorted position, determining that it is necessary to adjust the fisheye lens of the bullet camera; and
if the predicted position is located within the edge of the distorted position, determining that it is not necessary to adjust the fisheye lens of the bullet camera.

It should be noted that the distorted position can be a position where deformation occurs in the picture taken by the fisheye lens of the bullet camera.

It can be understood that, since the fisheye lens of the bullet camera has the characteristic of edge distortion, although it can be corrected by the distortion correction algorithm, the distortion of the fisheye lens of the bullet camera is too obvious. Currently, there is no algorithm that can completely correct the distortion of the fisheye lens of the bullet camera. In order to accurately determine the position of the target to be focused in the captured picture, when it is detected that the predicted position belongs to the distorted position in the captured picture, it is necessary to adjust the shooting angle of the fisheye lens of the bullet camera in time, allowing the predicted position to fall within the edge of the distorted position.

It should be noted that the above examples are only used to understand the present application and do not constitute a limitation on the control method for the camera device of the present application. Simple transformations in more forms based on this technical concept are all within the scope of the present application.

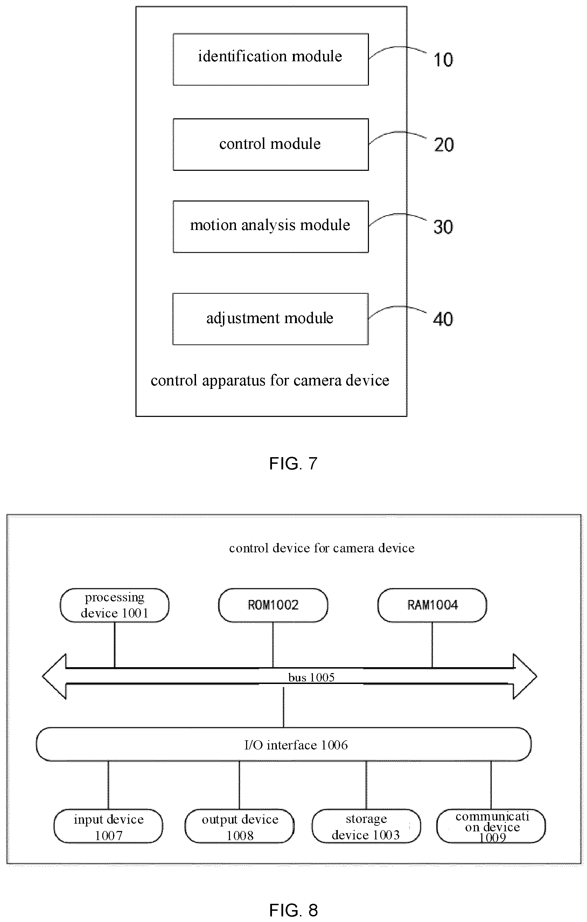

The present application also provides a control apparatus for a camera device. Please refer to FIG. 7, the control apparatus for the camera device includes an identification module 10, a control module 20, a motion analysis module 30 and an adjustment module 40.

The identification module 10 is configured to obtain the captured image taken by the fisheye lens of the bullet camera and identify the target to be focused from the captured image.

The control module 20 is configured to control the telephoto lens of the dome camera to shoot a spatial compression image containing the detailed features of the target to be focused.

The motion analysis module 30 is configured to analyze the motion behavior of the target to be focused based on the spatial compression image.

The adjustment module 40 is configured to adjust the shooting angle of the fisheye lens of the bullet camera based on the motion behavior, and adjust the monitoring angle and monitoring width of the telephoto lens of the dome camera.

In an embodiment, the control module 20 is also configured to filter a target image set containing the target to be focused from the frame image of the captured image, and identify the specific position of the target to be focused in the captured image from the target image set, to control the telephoto lens of the dome camera based on the specific position.

In an embodiment, the control module 20 is also configured to determine the visual angle that it is necessary for the telephoto lens of the dome camera to adjusted based on the specific position; control the telephoto lens of the dome camera to capture the close-up image of the target to be focused according to the visual angle; perform clarity analysis on the close-up image; if the clarity of the close-up image meets the preset clarity requirement, determine that the close-up image is the spatial compression image containing the detail features of the target to be focused.

In an embodiment, the control module 20 is also configured to perform frequency domain analysis on the close-up image to determine the image frequency of the target to be focused in the close-up image; preliminarily determine the image area in the close-up image whose clarity does not meet the preset clarity requirement based on the image frequency; perform pixel analysis on the image area to determine whether the features in the image area will destroy the overall clarity of the close-up image; if the image area will not destroy the overall clarity of the close-up image, it is determined that the close-up image meets the preset clarity requirement; and if the image area will destroy the overall clarity of the close-up image, it is determined that the close-up image does not meet the preset clarity requirement.

In an embodiment, the control module 20 is also configured to analyze the grayscale value of each pixel in the image area; determine the grayscale difference between the grayscale values of adjacent pixels; extract the feature information contained in the image area based on the grayscale value; determine whether the feature information is a valid feature; if the feature information is not a valid feature, it is determined that the feature in the image area will not destroy the overall clarity of the close-up image; and if the feature information is a valid feature, it is determined that the feature in the image area will destroy the overall clarity of the close-up image.

In an embodiment, the control module 20 is also configured to determine whether the feature information is helpful for identifying the target to be focused; if it is determined that the feature information is helpful, the feature information is determined to be the valid feature; and if it is determined that the feature information is not helpful, the feature information is determined not to be the valid feature.

In an embodiment, the motion analysis module 30 is also configured to extract the action features of the target to be tracked from the spatial compression image; and predict the motion behavior of the target to be focused based on the action features.

In an embodiment, the motion analysis module 30 is also configured to identify the motion features of the moving parts in the target to be focused from the action features, and the inertial features of the target to be focused during the movement process; determine the motion authenticity of the target to be focused based on the motion features and the inertial features; and if it is determined that the motion of the target to be focused is authentic, the motion behavior of the target to be focused is predicted based on the motion features and the inertial features.

In an embodiment, the motion analysis module 30 is also configured to determine the motion expectation of the target to be focused based on the motion feature; and to determine the authenticity of the motion expectation based on the inertial feature.

In an embodiment, the motion analysis module 30 is also configured to determine the real intention of the target to be focused based on the inertial feature if it is determined that the motion of the target to be focused is not real; and to predict the motion behavior of the target to be focused based on the real intention.

In an embodiment, the identification module 10 is also configured to obtain the captured image taken by the fisheye lens of the bullet camera, determine the focus area of the target to be tracked from the captured image; if there are multiple focus areas, determine the focus area with the shortest focal length from the focus areas as the target focus area; and identify the target to be focused from the target focus area.

In an embodiment, the identification module 10 is also configured to determine each of the focus targets as the target to be focused if multiple focus targets are identified in the target focus area.

In an embodiment, the adjustment module 40 is also configured to predict the motion trajectory of the target to be focused based on the motion behavior; predict the predicted position of the target to be focused in the captured image during the preset period of time based on the motion trajectory; determine the adjustment parameters of the telephoto lens of the dome camera and the adjustment data of the fisheye lens of the bullet camera according to the predicted position; adjust the monitoring angle and monitoring width of the telephoto lens of the dome camera according to the adjustment parameters; and adjust the shooting angle of the fisheye lens of the bullet camera according to the adjustment data.

In an embodiment, the adjustment module 40 is also configured to determine whether it is necessary to adjust the monitoring angle and monitoring width of the telephoto lens of the dome camera according to the predicted position, determine whether it is necessary to adjust the shooting angle of the fisheye lens of the bullet camera; if it is necessary to adjust the monitoring angle and monitoring width of the telephoto lens of the dome camera, the adjustment parameters of the telephoto lens of the dome camera are determined according to the preset position; and/or if it is necessary to adjust the shooting angle of the fisheye lens of the bullet camera, the adjustment data of the fisheye lens of the bullet camera is determined according to the preset position.

In an embodiment, the adjustment module 40 is also configured to detect the position difference between the predicted position and the current position, the current position being the position of the target to be focused in the spatial compression image; determine the safety distance between the current position and the trending edge of the spatial compression image, the trending edge being the developing edge corresponding to the movement direction of the target to be focused in the spatial compression image; determine whether the position difference is greater than the safety distance; and if the position difference is greater than the safety distance, it is determined that it is necessary to adjust the monitoring angle and monitoring width of the telephoto lens of the dome camera.

In an embodiment, the adjustment module 40 is also configured to determine whether the predicted position belongs to the distorted position in the captured image; if the predicted position belongs to the distorted position, it is determined that it is necessary to adjust the fisheye lens of the bullet camera; and if the predicted position is located within the edge of the distorted position, it is determined that it is not necessary to adjust the fisheye lens of the bullet camera.

The control apparatus for the camera device provided by the present application adopts the control method for the camera device in the above embodiment, which can solve the technical problem that the camera of the commonly used combination of a bullet camera and a dome camera is often affected by the structure of the bullet camera or the dome camera, resulting in a limited monitoring range. Compared with the related art, the beneficial effects of the control apparatus for the camera device provided by the present application are the same as the beneficial effects of the control method for the camera device provided by the above embodiment, and other technical features in the control apparatus for the camera device are the same as the features disclosed in the above embodiment method, which will not be repeated here.

The present application provides a control device for a camera device. The control device for the camera device includes: at least one processor; and a memory communicated with the at least one processor. An instruction executable by the at least one processor is stored in the memory. The instruction is executed by the at least one processor to enable the at least one processor to perform the control method for the camera device in the above-mentioned embodiment.

Referring to FIG. 8, which shows a schematic structural diagram of a control device for a camera device suitable for implementing an embodiment of the present application. The control device for the camera device in the embodiment of the present application can include, but is not limited to, mobile terminals such as mobile phones, laptop computers, digital broadcast receivers, personal digital assistants (PDAs), portable application descriptions (PADs), portable media players (PMPs), and vehicle-mounted terminals (such as vehicle-mounted navigation terminals), etc., and fixed terminals such as digital TVs, desktop computers, etc. The control device for the camera device shown in FIG. 8 is only an example and should not bring any limitation to the functions and scope of the embodiment of the present application.

As shown in FIG. 8, the control device for the camera device can include a processing device 1001 (e.g., a central processing unit, a graphics processing unit, etc.), which can perform various appropriate actions and processes according to a program stored in a read-only memory (ROM) 1002 or a program loaded from a storage device 1003 to a random access memory (RAM) 1004. Various programs and data required for the operation of the control device for the camera device are also stored in the RAM 1004. The processing device 1001, ROM 1002, and RAM 1004 are connected to each other via a bus 1005. An input/output (I/O) interface 1006 is also connected to the bus. Typically, the following systems can be connected to the I/O interface 1006: an input device 1007 including, for example, a touch screen, a touchpad, a keyboard, a mouse, an image sensor, a microphone, an accelerometer, a gyroscope, etc.; an output device 1008 including, for example, a liquid crystal display (LCD), a speaker, a vibrator, etc.; a storage device 1003 including, for example, a magnetic tape, a hard disk, etc.; and a communication device 1009. The communication device 1009 can allow the control device for the camera device to communicate wirelessly or wired with other devices to exchange data. Although the control device for the camera device having various systems is shown in the figure, it should be understood that it is not required to implement or have all the systems shown. More or fewer systems may be implemented or provided alternatively.

In particular, according to the embodiments disclosed in the present application, the process described above with reference to the flowchart can be implemented as a computer software program. For example, the embodiments disclosed in the present application include a computer program product, which includes a computer program carried on a computer-readable medium, and the computer program includes a program code for executing the method shown in the flowchart. In such an embodiment, the computer program can be downloaded and installed from a network through a communication device, or installed from a storage device 1003, or installed from ROM 1002. When the computer program is executed by the processing device 1001, the above-mentioned functions defined in the method of the embodiment disclosed in the present application are executed.

The control device for the camera device provided by the present application adopts the control method for the camera device in the above embodiment, which can solve the technical problem that the camera of the commonly used combination of the bullet camera and the dome camera is often affected by the structure of the bullet camera or the dome camera, resulting in a limited monitoring range. Compared with the related art, the beneficial effects of the control device for the camera device provided by the present application are the same as the beneficial effects of the control method for the camera device provided by the above embodiment, and other technical features in the control device for the camera device are the same as the features disclosed in the method of the previous embodiment, which will not be repeated here.

It should be understood that the various parts disclosed in the present application can be implemented by hardware, software, firmware or a combination thereof. In the description of the above embodiments, specific features, structures, materials or characteristics can be combined in any one or more embodiments or examples in a suitable manner.

The above are only embodiments of the present application, but the scope of the present application is not limited thereto. Any technician familiar with the technical field can easily think of changes or replacements within the technical scope disclosed in the present application, which should fall within the scope of the present application. Therefore, the scope of the present application shall be based on the scope of the claims.

The present application provides a computer-readable storage medium on which a computer-readable program instruction (i.e., a computer program) is stored, and the computer-readable program instruction is used to execute the control method for the camera device in the above-mentioned embodiment.

The computer-readable storage medium provided in the present application can be, for example, a USB flash drive, but is not limited to electrical, magnetic, optical, electromagnetic, infrared, or semiconductor systems, systems or devices, or any combination thereof. More specific examples of computer-readable storage media can include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In this embodiment, the computer-readable storage medium can be any tangible medium containing or storing a program that may be used by or in conjunction with an instruction execution system, system, or device. The program code contained on the computer-readable storage medium can be transmitted using any appropriate medium, including but not limited to: wires, optical cables, radio frequency (RF), etc., or any suitable combination of the above.

The computer-readable storage mediumcan be included in the control device for the camera device; or can exist independently and not be installed in the control device for the camera device.

The computer-readable storage medium carries one or more programs. When the one or more programs are executed by the control device for the camera device, the control device of the camera device is enabled to perform following operations: after obtaining the captured image taken by the fisheye lens of the bullet camera, identify the target to be focused from the captured image; control the telephoto lens of the dome camera to capture a spatial compression image containing the detailed features of the target to be focused; analyze the motion behavior of the target to be focused based on the spatial compression image; and based on the motion behavior, adjust the shooting angle of the fisheye lens of the bullet camera, and adjust the monitoring angle and monitoring width of the telephoto lens of the dome camera.

Computer program code for performing the operations of the present application can be written in one or more programming languages, or a combination thereof, including object-oriented programming languages such as Java, Smalltalk, C++, and conventional procedural programming languages such as "C" or similar programming languages. The program code can be executed entirely or partially on the user's computer, executed as a stand-alone software package, executed partially on the user's computer and partially on a remote computer, or executed entirely on the remote computer or server. In the case of a remote computer, the remote computer can be connected to the user's computer through any type of network, including a local area network (LAN) or a wide area network (WAN), or can be connected to an external computer (for example, through the Internet using an Internet service provider).

The flow chart and block diagram in the accompanying drawings illustrate the possible architecture, function and operation of the system, method and computer program product according to various embodiments of the present application. In this regard, each block in the flow chart or block diagram can represent a part of a module, a program segment or a code, and a part of this module, program segment or code includes one or more executable instructions for implementing the specified logical function. It should also be noted that in some alternative implementations, the function marked in the block can also occur in a sequence different from that marked in the accompanying drawings. For example, two blocks shown in succession can actually be performed substantially in parallel, and they can also be performed in the opposite order sometimes, depending on the function involved. It should also be noted that each block in the block diagram and/or flowchart, and combinations of blocks in the block diagram and/or flowchart, can be implemented by a dedicated hardware-based system that performs the specified function or operation, or can be implemented by a combination of dedicated hardware and computer instructions.

The modules involved in the embodiments described in the present application can be implemented by software or by hardware. The name of the module does not constitute a limitation on the unit itself in some cases.

The readable storage medium provided in the present application is a computer-readable storage medium, which stores computer-readable program instructions (i.e., computer programs) for executing the above-mentioned control method for the camera device, and can solve the technical problem that the camera of the commonly used combination of the bullet camera and dome camera is often affected by the structure of the bullet camera or dome camera, resulting in a limited monitoring range. Compared with the related art, the beneficial effects of the computer-readable storage medium provided in the present application are the same as the beneficial effects of the control method for the camera device provided in the above-mentioned embodiment, which will not be repeated here.

The present application also provides a computer program product, including a computer program. The computer program is executed by a processor, the control method for the camera device as described above is implemented.

The computer program product provided by the present application can solve the technical problem that the camera of the commonly used combination of the bullet camera and dome camera is often affected by the structure of the bullet camera or dome camera, resulting in a limited monitoring range. Compared with the related art, the beneficial effects of the computer program product provided by the present application are the same as the beneficial effects of the control method for the camera device provided by the above embodiment, which will not be repeated here.

The above descriptions are only some embodiments of the present application, and are not intended to limit the scope of the present application. All equivalent structural transformations made using the contents of description and drawings of the present application under the technical concept of the present application, or direct/indirect application in other related technical fields, are included in the scope of the present application.

## Claims

1. A control method for a camera device, applied to a control module in a camera, the camera comprising a fisheye lens of a bullet camera and a telephoto lens of a dome camera, **characterized in that** the control method comprises:
after obtaining a captured image taken by the fisheye lens of the bullet camera, identifying a target to be focused from the captured image;
controlling the telephoto lens of the dome camera to capture a spatial compression image containing a detailed feature of the target to be focused;
analyzing motion behavior of the target to be focused based on the spatial compression image; and
based on the motion behavior, adjusting a shooting angle of the fisheye lens of the bullet camera, and adjusting a monitoring angle and a monitoring width of the telephoto lens of the dome camera.

2. The control method according to claim 1, wherein before the controlling the telephoto lens of the dome camera to capture the spatial compression image containing the detailed feature of the target to be focused, the method further comprises:
screening a target image set containing the target to be focused from a frame image of the captured image; and
identifying a specific position of the target to be focused in the captured image from the target image set, to control the telephoto lens of the dome camera based on the specific position.

3. The control method according to claim 2, wherein the controlling the telephoto lens of the dome camera to capture the spatial compression image containing the detailed feature of the target to be focused comprises:
determining a visual angle needed to be adjusted by the telephoto lens of the dome camera based on the specific position;
controlling the telephoto lens of the dome camera to capture a close-up image of the target to be focused according to the visual angle;
performing a clarity analysis on the close-up image; and
in response to that clarity of the close-up image meets a preset clarity requirement, determining that the close-up image is the spatial compression image containing the detailed feature of the target to be focused.

4. The control method according to claim 3, wherein the performing the clarity analysis on the close-up image comprises:
performing frequency domain analysis on the close-up image to determine an image frequency of the target to be focused in the close-up image;
preliminarily determining an image area with clarity not meeting the preset clarity requirement in the close-up image based on the image frequency;
performing pixel analysis on the image area to determine whether features in the image area destroy overall clarity of the close-up image;
in response to that the image area does not destroy the overall clarity of the close-up image, determining that the close-up image meets the preset clarity requirement; or
in response to that the image area destroys the overall clarity of the close-up image, determining that the close-up image does not meet the preset clarity requirement.

5. The control method according to claim 4, wherein the performing the pixel analysis on the image area to determine whether the features in the image area destroy the overall clarity of the close-up image comprises:
analyzing a grayscale value of each pixel in the image area;
determining a grayscale difference between the grayscale values of adjacent pixels;
extracting feature information contained in the image area based on the grayscale values;
determining whether the feature information is a valid feature;
in response to that the feature information is not the valid feature, determining that the features in the image area does not destroy the overall clarity of the close-up image; or
in response to that the feature information is the valid feature, determining that the features in the image area destroy the overall clarity of the close-up image.

6. The control method according to claim 5, wherein the determining whether the feature information is the valid feature comprises:
determining whether the feature information is helpful in identifying the target to be focused;
in response to determining that the feature information is helpful, determining that the feature information is the valid feature; or
in response to determining that the feature information is not helpful, determining that the feature information is not the valid feature.

7. The control method according to claim 1, wherein the analyzing the motion behavior of the target to be focused based on the spatial compression image comprises:
extracting a motion feature of a target to be tracked from the spatial compression image; and
predicting the motion behavior of the target to be focused based on the motion feature.

8. The control method according to claim 7, wherein the predicting the motion behavior of the target to be focused based on the motion feature comprises:
identifying a motion feature of a moving part of the target to be focused and a inertia feature of the target to be focused during a movement process from the motion feature;
determining motion authenticity of the target to be focused based on the motion feature and the inertia feature; and
in response to determining that motion of the target to be focused is authentic, predicting the motion behavior of the target to be focused based on the motion feature and the inertia feature.

9. The control method according to claim 8, wherein the determining the motion authenticity the target to be focused based on the motion feature and the inertial feature comprises:
determining motion expectation of the target to be focused based on the motion feature; and
determining authenticity of the motion expectation based on the inertial feature.

10. The control method according to claim 8, wherein after the determining the authenticity of the movement of the target to be focused based on the movement feature and the inertial feature, the method further comprises:
in response to determining that the movement of the target to be focused is not authentic, determining real intention of the target to be focused based on the inertial feature; and
predicting the motion behavior of the target to be focused based on the real intention.

11. The control method according to claim 1, wherein after the obtaining the captured image taken by the fisheye lens of the bullet camera, identifying the target to be focused from the captured image comprises:
after obtaining the captured image taken by the fisheye lens of the bullet camera, determining a focus area of a target to be tracked from the captured image;
in response to that there are multiple focus areas, determining a focus area with a shortest focal length from the focus areas as a target focus area; and
identifying the target to be focused from the target focus area.

12. The control method according to claim 11, wherein the identifying the target to be focused from the target focus area comprises:
in response to that multiple focus targets are identified in the target focus area, determining each of the focus targets to be the target to be focused.

13. The control method according to claim 1, wherein the adjusting the shooting angle of the fisheye lens of the bullet camera and adjusting the monitoring angle and monitoring width of the telephoto lens of the dome camera based on the motion behavior comprises:
predicting a motion trajectory of the target to be focused based on the motion behavior;
predicting a predicted position of the target to be focused in the captured image during a preset time period based on the motion trajectory;
determining an adjustment parameter of the telephoto lens of the dome camera and adjustment data of the fisheye lens of the bullet camera according to the predicted position;
adjusting the monitoring angle and monitoring width of the telephoto lens of the dome camera according to the adjustment parameter; and
adjusting the shooting angle of the fisheye lens of the bullet camera according to the adjustment data.

14. The control method according to claim 13, wherein the determining the adjustment parameter of the telephoto lens of the dome camera and the adjustment data of the fisheye lens of the bullet camera according to the predicted position comprises:
determining whether it is necessary to adjust the monitoring angle and monitoring width of the telephoto lens of the dome camera according to the predicted position, and determining whether it is necessary to adjust the shooting angle of the fisheye lens of the bullet camera;
in response to that it is necessary to adjust the monitoring angle and monitoring width of the telephoto lens of the dome camera, determining the adjustment parameter of the telephoto lens of the dome camera according to the preset position; and/or
in response to that it is necessary to adjust the shooting angle of the fisheye lens of the bullet camera, determining the adjustment data of the fisheye lens of the bullet camera according to the preset position.

15. The control method according to claim 14, wherein the determining whether it is necessary to adjust the monitoring angle and monitoring width of the telephoto lens of the dome camera according to the predicted position comprises:
detecting a position difference between the predicted position and a current position, the current position being a position of the target to be focused in the spatial compression image;
determining a safe distance between the current position and an approaching edge of the spatial compression image, the approaching edge being a developing edge corresponding to a moving direction of the target to be focused in the spatial compression image;
determining whether the position difference is greater than the safe distance; and
in response to that the position difference is greater than the safe distance, determining that it is necessary to adjust the monitoring angle and monitoring width of the telephoto lens of the dome camera.

16. The control method according to claim 14, wherein the determining whether it is necessary to adjust the shooting angle of the fisheye lens of the bullet camera according to the predicted position comprises:
determining whether the predicted position belongs to a distorted position in the captured image;
in response to that the predicted position belongs to the distorted position, determining that it is necessary to adjust the fisheye lens of the bullet camera; or
in response to that the predicted position is located within a edge of the distorted position, determining that it is not necessary to adjust the fisheye lens of the bullet camera.

17. A control apparatus for a camera device, applied to a control module in a camera, the camera comprising a fisheye lens of a bullet camera and a telephoto lens of a dome camera, **characterized in that** the apparatus comprises:
an identification module, configured to obtain a captured image taken by the fisheye lens of the bullet camera and identify a target to be focused from the captured image;
a control module, configured to control the telephoto lens of the dome camera to capture a spatial compression image containing a detailed feature of the target to be focused;
a motion analysis module, configured to analyze motion behavior of the target to be focused based on the spatial compression image; and
an adjustment module, configured to adjust a shooting angle of the fisheye lens of the bullet camera based on the motion behavior, and adjust a monitoring angle and a monitoring width of the telephoto lens of the dome camera.

18. A control device for a camera device, **characterized by** comprising: a memory, a processor, and a computer program stored in the memory and executable on the processor, wherein the computer program is configured to implement the control method for the camera device according to any one of claims 1 to 16.

19. A storage medium, **characterized in that** the storage medium is a computer-readable storage medium; a computer program is stored on the storage medium, and when the computer program is executed by a processor, the control method for the camera device according to any one of claims 1 to 16 is implemented.

20. A computer program product, **characterized by** comprising a computer program, wherein when the computer program is executed by a processor, the control method for the camera device according to any one of claims 1 to 16 is implemented.
